# EUROPÄISCHE PATENTANMELDUNG

(11) **EP 2 666 345 A1**
(43) Veröffentlichungstag der Anmeldung: **27.11.2013**
(21) Anmeldenummer: 13002718.8
(22) Anmeldetag: 24.05.2013
(51) Int. Cl.: A01C 5/06, A01C 23/02

(54) **Einbringen von Düngemittel**

(30) Priorität: 24.05.2012 DE 102012010243
(71) Anmelder: Beckmann-Volmer GmbH & Co. KG, 48499 Salzbergen (DE)
(72) Erfinder: Die Erfindernennung liegt noch nicht vor
(74) Vertreter: Busse, Harald F.W.

(57) **Zusammenfassung**

Ein Verfahren zum Ausbringen von Dünger (D) über in einen Boden (2) eingreifende Leitungsabschnitte (3), die jeweils mit einer im Betrieb unterhalb der Bodenoberfläche liegenden Mündungsöffnung (4;11) versehen sind, wird so ausgeführt, daß mittels der Zinken oder Schare (5) Furchen (6) gezogen werden, die sich unterhalb und seitlich einer Linie (7) für einzubringendes Saatgut (14) erstrecken, wobei ein Teil des Düngers (D) in den Bereich (15) unterhalb der Linie (7) für Saatgut und ein Teil des Düngers (D) in einen Bereich (16) zumindest ungefähr seitlich neben der Linie (7) für Saatgut (14) ausgebracht wird.

## Beschreibung

Die Erfindung betrifft eine fahrbare Vorrichtung etwa einen Selbstfahrer, ein gezogenes oder geschobenes Fahrzeug, zum Einbringen von Dünger in einen Boden, wobei die Vorrichtung im Betrieb in einen Boden eingreifende Leitungsabschnitte aufweist, die jeweils mit einer im Betrieb unterhalb der Bodenoberfläche liegenden Mündungsöffnung versehen sind, nach dem Oberbegriff des Anspruchs 1.

Es ist bekannt, etwa für die Maissaat, einen Depotdünger einige Tage vor dem Ausbringen des Saatguts in den Boden unterhalb der später einzusetzenden Saatgutreihe einzubringen, um damit für die Sämlinge eine Unterfußdüngung vorzusehen. Dabei ist einerseits eine Versalzung der Sämlinge zu vermeiden, d. h., daß ein erheblicher Abstand zu dem Düngerdepot einzuhalten ist. Andererseits bewirkt jedoch ein großer Abstand, daß die Wurzeln erst nach eine vergleichsweise langen Zeit einen Zugang zu dem Düngerdepot haben und dadurch in der ersten Wachstumsphase der Dünger noch keine Wirkung entfalten kann. Die Problematik in Bezug auf eine Gülledüngung ist etwa in dem Artikel "Gülledepot unter Mais im Praxistest" der Zeitschrfit "topagrar" in der Ausgabe 3/2012 zu entnehmen.

Der Erfindung liegt das Problem zugrunde, die Düngebedingungen, insbesondere bei einer Gülledüngung, vor dem Einsetzen des Saatguts zu optimieren.

Die Erfindung löst dieses Problem durch eine fahrbare Vorrichtung mit den Merkmalen des Anspruchs 1 sowie durch ein Verfahren mit den Merkmale des Anspruchs 10 oder des Anspruchs 11, deren Merkmale einzeln oder in Kombination miteinander verwirklicht sein können. Hinsichtlich weiterer Ausgestaltungen und Merkmale der Erfindung wird auf die abhängigen Ansprüche 2 bis 9 und 12 bis 20 verwiesen,

In der Ausbildung nach Anspruch 1 ist dadurch, daß die zum Einbringen des Düngers, insbesondere Flüssigdüngers, in den Boden vorgesehenen Leitungsabschnitte Zinken oder Scharen zugeordnet sind, die im Betrieb in den Boden eingreifen und jeweils einen schmalen, aufragenden Längsabschnitt aufweisen, der im unteren Bereich in einen mit einer Querkomponente versehenen Endabschnitt übergeht zweierlei ermöglicht: Zum einen weisen die für das Einbringen des Düngers gebildeten Fugen eine von der Geradlinigkeit abweichende Form aus, so daß sie gleichzeitig die spätere Saatgutlinie untergreifen und auch neben dieser verlaufen können. Zum anderen kann mit der Zuordnung der Leitungsabschnitte zu diesen Zinken oder Scharen noch beim Prozeß des Ziehens der Furche diese teilweise mit Dünger angefüllt werden, wobei im Unterschied zur bisherigen reinen Unterfußdüngung das Anfüllen der Furche mit Dünger derart geschehen kann, daß auch eine Linie seitlich der späteren Saatgutlinie noch mit Dünger angefüllt ist. Diese seitliche Linie kann etwa dort liegen, wo üblicherweise ein Kunstdüngerdepot angelegt wurde. Kunstdünger kann dadurch mit der Erfindung für ein Maiseinsäen vollständig verzichtbar sein.

Insbesondere kann die Schar oder Zinke so geformt sein, daß der Übergang von Längs- zu Querabschnitt stufenlos erfolgt und somit auch bei schwerem Boden eine hinreichend lange, in sich gekrümmte Fuge unter und neben der späteren Saatgutlinie angekelegt werden kann.

Zur Bildung einer solchen Fuge können vorteilhaft die Zinken, oder Schare in Ansicht von vorne zumindest ungefähr eine Parabelform aufweisen.

Um das Einschneiden in den Boden nicht zu stören, sind die Leitungsabschnitte günstig rückseitig der Zinken oder Schare angeordnet und können dort beispielsweise für eine hohe mechanische Stabilität und Wartungsarmut jeweils fest und direkt an Zinken oder Scharen angeordnet sein.

So ist es auch für einen Dauereinsatz in schweren Böden möglich, daß die Leitungsabschnitte als Hohlprofile aus Stahl ausgebildet und an die Zinken oder Scharen angeschweißt sind.

Um die gebildete Fuge möglichst hoch mit Dünger anfüllen zu können, und nicht nur im unteren Endbereich, kann die zumindest eine Mündungsöffnung oberhalb des unteren Endes der Schar oder Zinke gelegen sein. Beispielsweise beträgt der Abstand zum unteren Ende zumindest 10 Zentimeter.

Weiter können die Zinken oder Schare in sich geteilt sein und ein unteres. Ende sowie ein höher gelegenes, seitlich abgespreiztes Ende aufweisen, um damit eine verzweigte, abgestufte Fuge zu bilden.

Zusätzlich oder alternativ können die Leitungsabschnitte geteilt sein und zwei Mündungsöffnungen aufweisen, von denen eine dem unteren Ende der Fuge zugeordnet und eine seitlich abgespreizt ist. Damit können dann in einem. Arbeitsgang zwei Depots angelegt werden: eins unter der Saatgutlinie und eins ungefähr neben dieser.

Durch das Verfahren nach Anspruch 11 ist es möglich, in einem gemeinsame Arbeitsgang eine gekrümmt Furche zu ziehen und diese gleichzeitig mit Dünger derart zu fluten, daß dieser sich nicht nur im unteren Bereich sammelt, sondern im Querschnitt beispielsweise wie beim Querschnitt einer Banane nach oben hin ersteckt ist.

Durch das Verfahren, nach Anspruch 12 können, mittels der Zinke oder Schare Furchen gezogen werden, die sich unterhalb und seitlich einer Linie für einzubringendes Saatgut erstrecken, wobei ein Teil des Düngers in den Bereich unterhalb der Linie für Saatgut und ein Teil des Düngers in einen Bereich, seitlich neben der Linie für Saatgut ausgebracht wird. Es ist also gleichzeitig eine Unterfußdüngung wie auch eine seitliche Düngung möglich.

Dabei kann die Furche vom unterhalb der Linie für Saatgut liegenden Bereich bis zum seitlich der Linie für Saatgut liegenden Bereich durchgehend mit Dünger befüllt werden, so daß sich die o. g. Bananenform im Querschnitt ergeben kann. Insbesondere sind hierfür die Zinken oder Schare stufenlos gekrümmt und ziehen ein in etwa im Querschnitt bananenförmige Furche, die von unten bis in den Bereich seitlich der Linie für Saatgut mit Dünger befüllt wird.

Dabei ist besonders günstig, wenn durch den Eingriff der Zinken oder Schare eine eine Aufwärtskomponente enthaltende Kraft auf einen Bodenbereich schräg oberhalb der Eingriffsfurche ausgeübt wird, so daß dieser eine leichte Anhebung und Auflockerung zwischen einer Bruchkante, und der Eingriffsfurche erfährt.

Insbesondere kann durch Nachlauf von den Boden glättenden Körpern, insbesondere Walzen, dann auf den zuvor gelockerten Bogenbereich eine Abwärtskraft ausgeübt werden, die auch auf in die Furche eingebrachtes Düngemittel wirkt und dieses dadurch entlang einer Bruchkante vom unteren Ende der Furche zu einem V-förmigen Querschnitt aufsteigen läßt. Das Düngerdepot ist dann automatisch beidseits der Linie für Saatgut angelegt, diese Linie kann ungefähr mittig des V-förmigen Depots gezogen werden, um den Keimling optimal zu versorgen.

Es können auch zwei Depots auf zwei unterschiedlichen Höhenniveaus in einem Arbeitsgang angelegt werden. Hierfür können die Zinken oder Schare in sich geteilt sein und im Bereich seitlich der Linie für Saatgut eine abgestufte Aufnahmelinie für Dünger in den Boden einarbeiten.

Zusätzlich oder alternativ können die Leitungsabschnitte jeweils geteilt sein und zwei Mündungsöffnungen aufweisen, von denen eine Dünger in den Bereich unterhalb der künftigen Saatgutlinie und eine Dünger in die Aufnahmelinie seitlich der Saatgutlinie einbringt.

In beiden Fällen ist durch die Düngerdepots unter und neben der Saatgutlinie ein Kunstdünger verzichtbar, so daß sich erhebliche Einsparungen und ökologische Vorteile ergeben,

Besonders günstig ist den Zinken oder Scharen am Fahrzeug eine die gezogenen Fugen zumindest bereichsweise verschließende Walze nachgeordnet, so daß sich eine feinkrümelige Bodenoberfläche ohne große Verwerfungen ergibt.

Insbesondere können auch nach ein paar Tagen die gezogenen Fugen noch als mechanische Führungshilfen für ohnehin dort vorhandene Düngeschare einer Maisdrille beim Einbringen des Saatguts dienen, auch wenn diese Düngeschare dann nicht mehr zum Ausbringen von weiterem Dünger benötigt werden.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: eine schematische Ansicht von hinten einer Vorrichtung, die beispielhafte Merkmale gemäß einer ersten Ausführung mit Leitungsabschnitten, mit jeweils einer Mündungsöffnung aufweist,

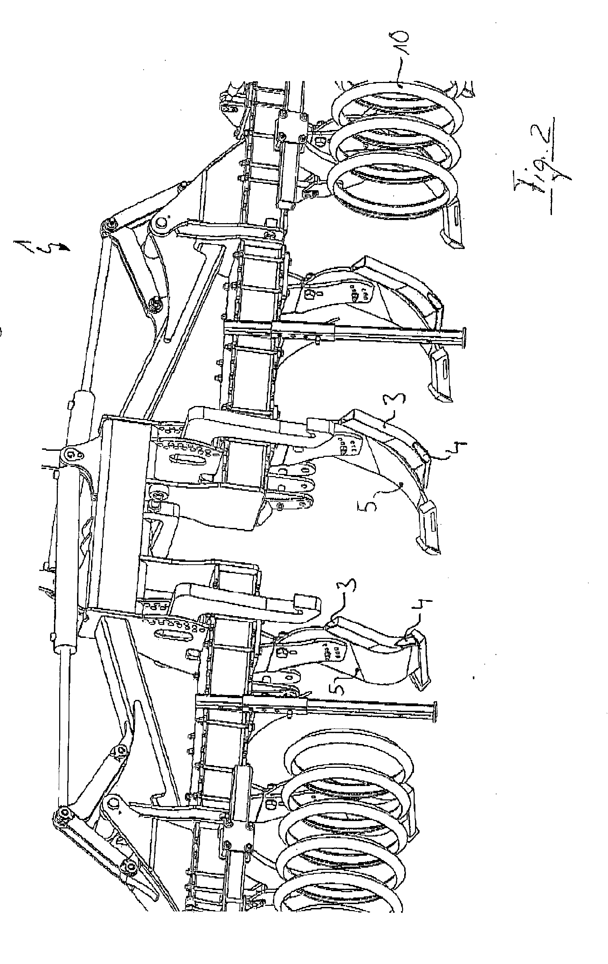

- Fig. 2: eine perspektivische Detailansicht des quermittigen Bereichs der Vorrichtung nach Anspruch 1,
- Fig. 3: eine schematische Ansicht von hinten einer Vorrichtung, die alternative beispielhafte Merkmale gemäß einer zweiten Ausführung mit Leitungsabschnitten mit jeweils zwei Mündungsöffnungen aufweist,
- Fig. 4: eine perspektivische Detailansicht des quermittigen Bereichs der Vorrichtung nach Anspruch 3,
- Fig. 5: eine schematische Ansicht eines Bodenauaschnitts von vorne, in den nach dem erfindungsgemäßen Verfahren eine Fuge eingebracht und von unterhalb bis seitlich des Keimlings in der späteren Saatgutlinie - hier ebenfalls eingezeichnet - durchgehend mit Dünger befüllt wurde,
- Fig. 6: eine ähnliche Ansicht wie Figur 5, jedoch hier mit einer Fuge, die zwei Depots unterhalb und seitlich des Keimlings in der späteren Saatgutfuge aufweist,
- Fig. 7: eine schematische Ansicht eines Bodenausschnitts von vorne, in den nach dem erfindungsgemäßen Verfahren eine Fuge eingebracht wird, wobei integral ein Bodenbereich bis zu einer Bruchkante angehoben und aufgelockert wird und wobei die gezogene Fuge gleichzeitig mit Dünger befüllt wird,
- Fig. 8: eine ähnliche Ansicht wie Figur 7, jedoch nach einer abwärts gerichteten Verdichtung des zuvor gelockerten Bodenbereich, wodurch ein teilweiser Aufstieg des Düngemittels entlang der Bruchkante, zu einem V-förmigen Depot stattfindet.

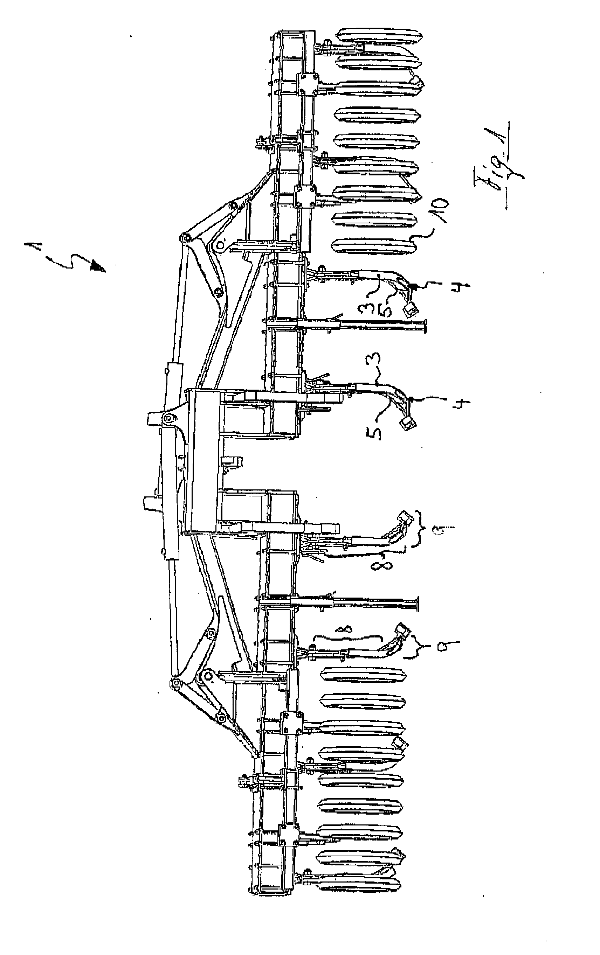

Die in Figur 1 von hinten dargestellte Vorrichtung 1 ist fahrbar und bildet hier eine gezogene Einheit aus, könnte jedoch auch geschoben werden oder ein Selbstfahrer sein. In jedem Fall ist sie geeignet zum Ausbringen von Dünger D und weist hierfür im Betrieb in einen Boden 2 eingreifende Leitungsabschnitte 3 auf, die jeweils mit zumindest einer im Betrieb unterhalb der Bodenoberfläche liegenden Mündungsöffnung 4 versehen sind. Im Ausführungsbeispiel nach Figur 1 ist pro Leitungsabschnitt 3 genau eine solche Mündungsöffnung 4 vorgesehen.

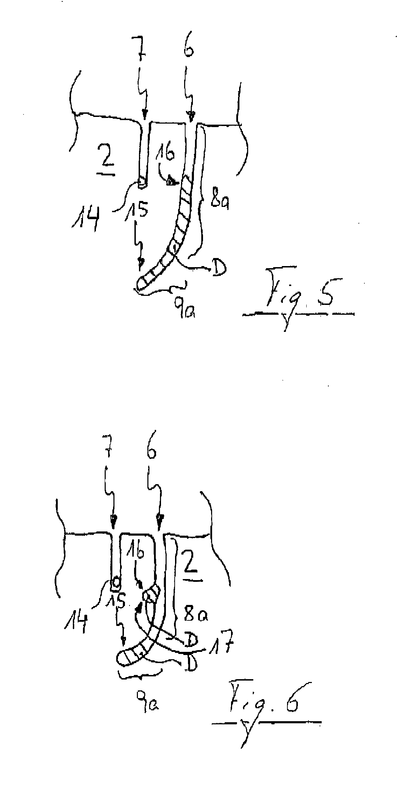

Die genannten Leitungsabschnitte 3 sind Zinken, oder Scharen 5 zugeordnet, welche im Betrieb - ähnlich wie ein Grubber - in den Boden 2 eingreifen, zum Beispiel typisch bis zu einer Tiefe von etwa 10 bis 15 Zentimeter. Diese Zinken oder Schare 5 sind zueinander in einem Normabstand horizontal beabstandet, der dem gewünschten Normabstand von Saatgutreihen 7 entspricht. Der Eingriff dieser Zinken oder Schare 5 erfolgt jedoch einige Zentimeter neben den - zum Zeitpunkt des Eingriffs der Zinken 5 noch nicht angelegten - Saatgutreihen 7, so daß auch das obere Ende der gezogenen Furchen 6 einige Zentimeter neben den geplanten Saatgutreichen, 7 liegt, wie etwa in den Figuren 5 und 6 deutlich wird.

Jede Zinke oder Schar 5 weist einen schmalen, aufragenden Längsabschnitt 8 auf, der im unteren Bereich in einen mit einer Querkomponente - bezüglich der Fahrtrichtung - versehenen Endabschnitt 9 übergeht,

In den hier gezeichneten Ausführungsbeispielen erfolgt der Übergang von Längs- 8 zu Querabschnitt 9 stufenlos, was nicht zwingend ist. Dabei können, wie hier bezeichnet, die Zinken oder Schare 5 in Ansicht von vorne zumindest ungefähr eine Parabelform aufweisen. Diese findet sich in den gezogenen Fugen oder Furchen 6 dann wieder, so daß auch diese nicht geradlinig sind, sondern, einen aufragenden 8a und einen unten ungefähr quer hierzu erstreckten Bereich 9a zeigen.

Dabei sind die Leitungsabschnitte 3 rückseitig der Zinken oder Schare 5 angeordnet, wobei diese Anordnung hier eine feste und direkte Anbindung an die Zinken oder Schare 5 ausbildet, so daß in einem Arbeitsgang die Furchen 6 gezogen werden und über die unmittelbar folgenden Leitungsabschnitte 3 der Dünger, hier Flüssigdünger, insbesondere Gülle, in die noch offenen Furchen eingebracht wird, ehe durch eine Nachlaufwalze 10 oder ähnliches die Furche 6 zumindest teilweise geglättet und geschlossen wird.

Hier sind die Leitungsabschnitte 3 beispielhaft als in sich formstabile Hohlprofile - zum Beispiel Vierkantprofile - aus Stahl ausgebildet und für eine gute Stabilität auch in schweren Böden an die Zinken oder Scharen 5 angeschweißt.

Wie in Figur 1 zu erkennen ist, kann die zumindest eine Mündungsöffnung 4 oberhalb des unteren Endes der Schar oder Zinke 5 gelegen sein, etwa auch mit einem Abstand von zumindest 10 Zentimetern, um dadurch ein hohes Auffüllen der Furche und einen hohen Eintrag von beispielsweise Gülle zu ermöglichen, wie weiter unten noch näher beschrieben ist.

Alternativ zu der hier gezeigten einteiligen parabelförmigen Grundform der Zinken oder Schare 5 können diese auch in sich geteilt sein und nicht nur eine unteres Ende 9, sondern auch noch ein höher gelegenes, seitlich abgespreiztes Ende aufweisen (hier nicht gezeichnet).

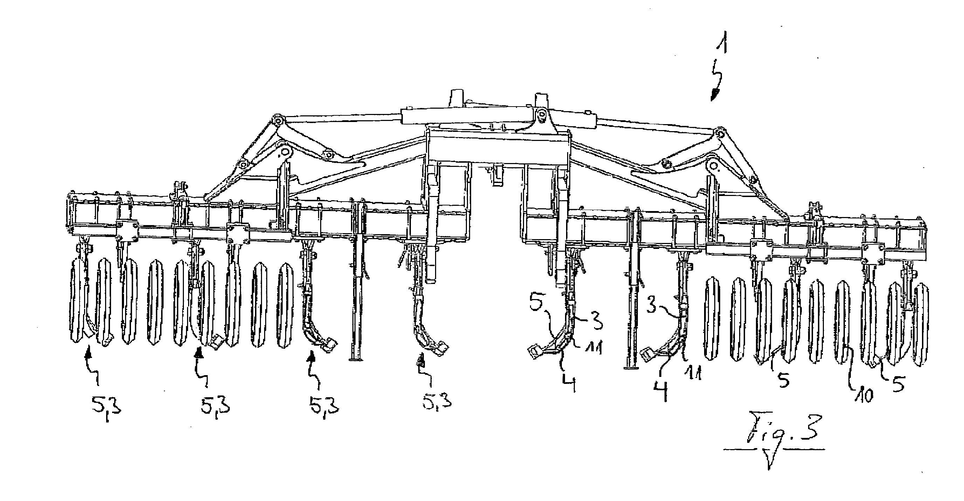

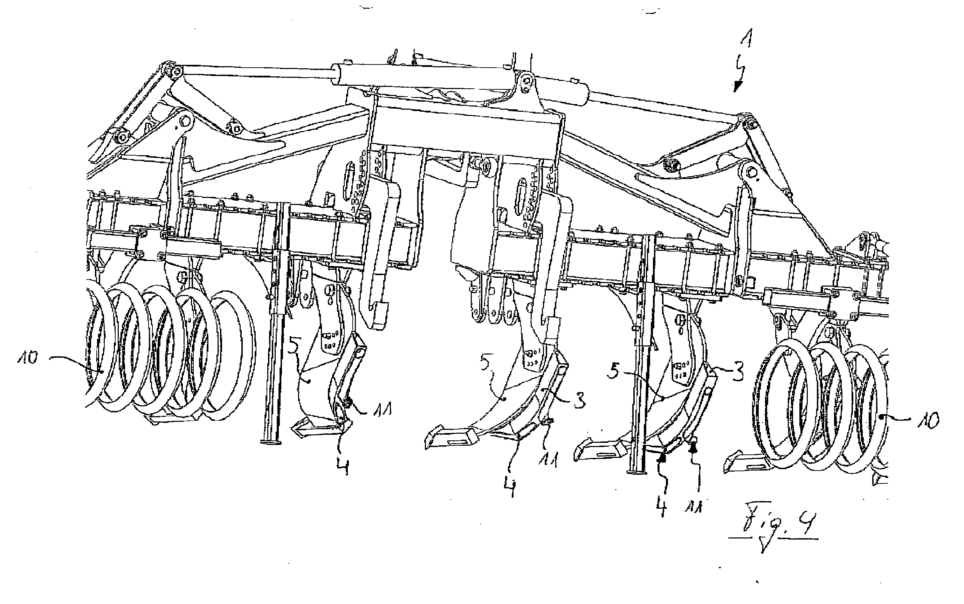

Im Ausführungsbeispiel nach den Figuren 3 und 4 ist jedoch eingezeichnet, daß die Leitungsabschnitte geteilt sind und zwei Mündungsöffnungon 4, 11 aufweisen, von denen eine 4 dem unteren Ende der Schar 5 zugeordnet und eine 11 seitlich abgespreizt ist. Damit können zwei Depots 12, 13 in unterschiedlichen Höhen angelegt werden, wie dies in Figur 6 dargestellt ist.

Der Dünger, insbesondere Gülle, wird derart in den Boden 2 eingebracht, daßin einem Arbeitsgang mittels der Schare oder Zinken 5 die Furche 6 gezogen wird und von der rückseitig daran angebrachten Leitungsabschnitt 3 der Dünger D in die Furche 6 eingebracht wird, und zwar nicht nur in den unteren Bereich der Furche als Unterfußdüngung für einzusetzende Keime 14 in einer Saatgutbahn 7, sondern auch gleichzeitig seitlich neben dieser.

In einem ersten Verfahren, dessen Ergebnis schematisch in Figur 5 gezeigt ist und daß beispielsweise mit einer Vorrichtung 1 nach Figur 1 durchführbar ist, kann die Furche 6 vom unterhalb der (späteren) Linie 7 für Saatgut 14 liegenden Bereich 15 bis zum seitlich der Linie 7 für Saatgut 14 liegenden Bereich 16 durchgehend mit Dünger D befüllt wird.

Wenn wie in Figur 1 die Zinken oder Schare 5 stufenlos gekrümmt sind und eine in etwa im Querschnitt bananenförmige Furche 6 ziehen, kann diese von unten 15 bis in den Bereich, zumindest ungefähr seitlich der Linie 7 für Saatgut 14 mit Dünger D befüllt werden. Dabei liegt der untere Bereich 15 etwa 5 bis 10 oder mehr Zentimeter unterhalb des Keimlings 14, ebenso liegt der seitliche Bereich 16 etwa 5 bis 10 Zentimeter horizontal zu dem Keimling 14 (zum Beispiel Mais) beabstandet. Die Eingriffstiefe der Schar 5 kann je nach Art des Saatguts variieren, so daß das untere Ende der Schar etwa 15 bis 50 Zentimeter tief in den Boden eindringen kann. Typisch ist eine Tiefe von etwa 25 bis 35 Zentimetern.

Wie oben bereits zum Ausführungsbeispiel nach den Figuren 3 und 4 beschrieben, können die Zinken oder Schare 5 in sich geteilt sein und im Bereich seitlich der Linie für Saatgut eine abgestufte Aufnahmelinie 17 für Dünger D in den Boden einarbeiten. Dabei kann es auch genügen, insbesondere für weichere Böden, wenn nur die Leitungsabschnitte abzweigend geteilt sind und zwei Mündungsöffnungen 4, 11 aufweisen, von denen eine 4 Dünger D in den Bereich 15 unterhalb der Saatgutlinie 7 und eine 11 Dünger in die Aufnahmelinie 17 seitlich der Saatgutlinie 7 einbringt. In diesem in Figur 6 gezeichneten Beispiel sind das obere und das untere Düngerdepot geteilt.

Es ist auch möglich, daß das untere Depot 15 und das obere, seitlich neben dem noch einzubringenden Saatgut 14 vorgesehene Depot 16 auf verschiedenen Seiten der Saatgutlinie 7 angelegt werden, wobei dann für jede Saatgutlinie 7 zwei unterschiedlich tief eingreifende Schare oder Zinken 5 vorgesehen sein müßten, um die Depots 15 und 16 in unterschiedlichen Höhen anlegen zu können, wobei auch dann das untere Depot 15 unterhalb des später einzusetzenden Keims 14 und das obere Depot 16 seitlich von diesem läge.

In der durchgehenden Befüllung einer Furche 6 nach Figur 5 ist hingegen im Querschnitt eine bananenförmige Düngerform in die eine Furche 6 gelegt. Diese Variante ermöglicht es, besonders viel Gülle pro Fläche auszubringen, was bei einem hohen Gülleanfall sehr vorteilhaft sein kann. Dabei muß die Furche 6 nicht bis exakt auf die Höhe des später einzusetzenden Saatguts 14 befüllt werden, sondern kann auch ein bis drei Zentimeter darunter enden. Beispielsweise können damit bei einem Reihenabstand von 75 Zentimetern 15.000 bis 50.000 Liter Dünger D pro Hektar ausgebracht werden.

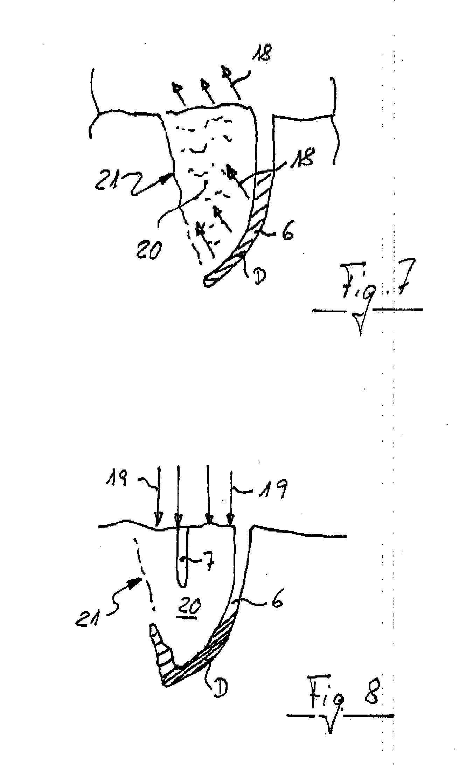

Insbesondere ist es hierfür günstig (sh. Figur 7), wenn durch den Eingriff der Zinken oder Schare 5 eine eine Aufwärtskomponente enthaltende Kraft 18 auf einen Bodenbereich 20 schräg seitlich und oberhalb der Eingriffsfurche 6 ausgeübt wird. Dies geschieht durch die Formgebung der Zinken oder Schare 5 automatisch: Es bildet sich eine Bruchkante 21, zwischen der und der Zinke 5 ein etwa schildförmiger Bodenbereich 20 leicht angehoben und dabei aufgelockert wird. Um dies zu erreichen, hebt sich die Zinke oder Schar 5 um einige Zentimeter nach hinten an, zum Beispiel um etwa 8 Zentimeter. Gleichzeitig hat sie in Zugrichtung eine Erstreckung von etwa 20 bis 25 Zentimeter, so daß sie wie ein Schubkeil durch den Boden gezogen wird und den Bereich 20 dabei in Richtung der Pfeile 18 anhebt - beispielsweise auf einer Breite von ca. 20 bis 30 Zentimetern.

Beispielsweise am Fahrzeug 1 selbst können den Boden glättende Körper 10, insbesondere Walzen, vorgesehen sein, die noch bei der Bearbeitung im Nachlauf auf den Bodenbereich 20 eine Abwärtskraft 19 ausüben (sh. Figur 8). Diese Abwärtskraft 19 wirkt auch auf in die Furche 6 eingebrachtes Düngemittel, D, so daß dieses zu einer Ausweichbewegung gezwungen wird. Dieses Ausweichen geschieht aber leichter nach schräg oben entlang der Bruchkante 21 als weiter nach unten in nicht aufgelockerte Bpdenbereiche. Dadurch steigt Düngemittel D entlang der Bruchkante 21 vom undteren Ende der Furche 6 auf, so daß sich insgesamt ein ungefähr V-formiger Querschnitt des Depots an Düngemittel D, insbesondere flüssiger Gülle oder eines flüssigen Substrats aus einer Biogasanlage, ausbilden kann. Durch die Glättung dcs Bodens kann auch die Furche 6 oberseitig verschlossen werden, und dennoch kann im oberen Bereich die Form einer vertieften Linie verhalten bleiben. Insbesondere können für die Glättung jeweils zwei Räder 10 den Streifen überrollen, einen leichten Wall formen und das obere Ende des Injektionsschlitzes zudrücken.

Trotz einer teilweisen Glättung durch die zumindest eine nachlaufende Walze 10 können so die gezogenen Fugen oder Furchen 6 auch noch ein paar Tage nach der Düngung als Führungshilfen für Düngeschare einer Maisdrille beim Einbringen des Saatguts 14 dienen. Ein GPS ist daher für die Saatgutausbringung nicht erforderlich. Derartige Düngeschare sind ohnehin an der Maisdrille vorhanden und können sich an den Furchen 6 entlangtasten und dort zentrieren, auch wenn gemäß der Erfindung auf das zusätzli, che Ausbringen von Kunstdünger ungefähr seitlich neben dem Keimling 14 verzichtet werden kann.

Unabhängig davon, ob sich ein bananen- oder V-förmiges Gülledepot D ausbildet, ist in jedem Fall die Saatgutrille 7 überwiegend seitlich neben dem Gülledepot D gebildet. Salzschäden am Keim-ling 14 sind dadurch zuverlässig ausgeschlossen. Direkt nach dem Ausbringen, der Gülle kann mit der Saat begonnen werden. Das Düngedepot kann in Reheinkulturen angelegt werden, wobei, die Streifen jeweils gleichmäßig über ihre ganze Länge bearbeitet werden.

**Bezugszeichenliste:**

| | | | |
|---|---|---|---|
| 1 | Vorrichtung, | 15 | Bereich unterhalb der Saatgutlinie, |
| 2 | Boden, | | |
| 3 | Leitungsabschnitte, | 16 | Bereich neben der Saatgutlinie, |
| 4 | Mündungsöffnung, | | |
| 5 | Zinken oder Schare, | 17 | seitliche Depotlinie, |
| 6 | von diesen gezogene Furchen, | 18 | den Boden anhebende Richtung, |
| 7 | Saätgutreihen, | | |
| 8 | aufragender Bereich der Schar, | 19 | den Boden verdichtende Richtung, |
| 9 | quer verlaufender unterer Bereich der Schar, | 20 | aufgelockerter Bodenbereich, |
| 8a | aufragender Bereich der Furche, | 21 | Bruchkante, |
| | | D | Dünger |
| 9a | quer verlaufender unterer Bereich der Furche, | | |
| 10 | Nachlaufwalze, | | |
| 11 | Mündungsöffnung | | |
| 12 | unteres Düngerdepot, | | |
| 13 | oberes Düngerdepot, | | |
| 14 | Saatgut, | | |

## Patentansprüche

1. Fahrbare Vorrichtung (1), geeignet zum Ausbringer von Dünger (D), wobei die Vorrichtung (1) im Betrieb in einen Boden (2) eingreifende Leitungsabschnitte (3) aufweist, die jeweils mit einer im Betrieb unterhalb der Bodenoberfläche liegenden Mündungsöffnung (4;11) versehen sind,
**dadurch gekennzeichnet,**
**daß** die Leitungsabschnitte (3) Zinken oder Scharen (5) zugeordnet sind, die im Betrieb in den Boden (2) eingreifen und jeweils einen schmalen, aufragenden Längsabschnitt (8) aufweisen, der im unteren Bereich in einen mit einer Querkomponente versehenen Endabschnitt (9) übergeht.

2. Vorrichtung (1) nach Anspruch 1,
**dadurch gekennzeichnet,**
**daß** der Übergang von Längs- (8) zu Querabschnitt (9) stufenlos erfolgt.

3. Vorrichtung (1) nach einem der Ansprüche 1 oder 2,
**dadurch gekennzeichnet,**
**daß** die Zinken oder Schare (5) in Ansicht von vorne zumindest ungefähr eine Parabelform aufweisen.

4. Vorrichtung (1) nach einem der Ansprüche 1 bis 3,
**dadurch gekennzeichnet,**
**daß** die Leitungsabschnitte (3) rückseitig der Zinken, oder Schare (5) angeordnet sind.

5. Vorrichtung (1) nach einem der Ansprüche 1 bis 4,
**dadurch gekennzeichnet,**
**daß** die Leitungsabschnitte (3) jeweils fest und direkt an Zinken oder Scharen (5) angeordnet sind.

6. Vorrichtung (1) nach Anspruch 5,
**dadurch gekennzeichnet,**
**daß** die Leitungsabschnitte (3) als Hohlprofile aus Stahl ausgebildet und an die Zinken oder Scharen (5) angeschweißt sind.

7. Vorrichtung (1) nach Anspruch 6,
**dadurch gekennzeichnet,**
**daß** die zumindest eine Mündungsöffnung (4;11) oberhalb des unteren Endes der Schar oder Zinke (5) gelegen ist.

8. Vorrichtung (1) nach Anspruch 7,
**dadurch gekennzeichnet,**
**daß** der Abstand zumindest 10 Zentimeter beträgt.

9. Vorrichtung (1) nach einem der Ansprüche 1 bis 8,
**dadurch gekennzeichnet,**
**daß** die Zinken oder Schare (5) in sich geteilt sind und eine unteres Ende sowie ein höher gelegenes, seitlich abgespreiztes Ende aufweisen.

10. Vorrichtung (1) nach einem der Ansprüche 1, bis 9,
**dadurch gekennzeichnet,**
**daß** die Leitungsabschnitte (3) geteilt sind und zwei Mündungsöffnungen (4; 11) aufweisen, von denen eine (4) dem unteren Ende des Leitungsabschnitts (3) zugeordnet und eine (11) seitlich abgespreizt ist.

11. Verfahren zum Ausbringen von Dünger (D) über in einen Boden (2) eingreifende Leitungsabschnitte (3), die jeweils mit einer im Betrieb unterhalb der Bodenobernfläche liegenden Mündungsöffnung (4; 11) versehen sind,
**dadurch gekennzeichnet,**
**daß** die Leitungsabschnitte (3) Zinken oder Scharen (5) zugeordnet sind, die im Betrieb in den Boden (2) eingreifen und jeweils eine Furche (6) ziehen mit einem schmalen, aufragenden Längsabschnitt (8a), der im unterer Bereich in einen mit einer Querkomponente versehenen Endabschnitt (9a) übergeht,

12. Verfahren zum Ausbringen von Dünger (D) über in einen Boden (2) eingreifende Leitungsabschnitte (3), die jeweils mit einer im Betrieb unterhalb der Bodenoberfläche liegenden Mündungsöffnung (4;11) versehen sind,
**dadurch gekennzeichnet,**
**daß** mittels der Zinken oder Schare (5) Furchen (6) gezogen werden, die sich unterhalb und seitlich einer Linie (7) für einzubringendes Saatgut (14) erstrecken, wobei ein Teil des Düngers (D) in den Bereich (15) unterhalb der Linie (7) für Saatgut und ein Teil des Düngers (D) in einen Bereich (16) zumindest ungefähr seitlich neben der Linie (7) für Saatgut (14) ausgebracht wird.

13. Verfahren nach Anspruch 12,
**dadurch gekennzeichnet,**
**daß** die Furche (6) vom unterhalb der Linie (7) für Saatgut liegenden Bereich (15) bis zum seitlich der Linie (7) für Saatgut liegenden Bereich (16) durchgehend mit Dünger (D) befüllt wird.

14. Verfahren nach Anspruch 13,
**dadurch gekennzeichnet,**
**daß** die Zinken oder Schare (5) stufenlos gekrümmt sind und eine in etwa im Querschnitt bananenförmige Furche (6) ziehen, die von unten (15) bis in den Bereich (16) seitlich der Linie (7) für Saatgut mit Dünger (D) befüllt wird.

15. Verfahren nach einem der Ansprüche 10 bis 14,
**dadurch gekennzeichnet,**
**daß** durch den Eingriff der Zinken oder Schare (5) eine eine Aufwärtskomponente enthaltende Kraft (18) auf einen Bodenbereich (20) schräg oberhalb der Eingriffsfurche (6) ausgeübt wird.

16. Verfahren nach Anspruch 15einem der Ansprüche 10 bis 14,
**dadurch gekennzeichnet,**
**daß** durch Nachlauf von den Boden glättenden Körpern (10), insbesondere Walzen, auf den Bodenbereich (20) eine Abwärtskraft (19) ausgeübt wird, die auch auf in die Furche (6) eingebrachtes Düngemittel (D) wirkt und dieses entlang einer Bruchkante (21) von unteren Ende der Furche (6) zu einem V-förmigen Querschnitt aufsteigen läßt.

17. Verfahren nach Anspruch 12,
**dadurch gekennzeichnet,**
**daß** die Zinken oder Schare (5) in sich geteilt sind und im Bereich seitlich der Linie für Saatgut eine abgestufte Aufnahmelinie (17) für Dünger (D) in den Boden einarbeiten.

18. Verfahren nach einem der Ansprüche 10 bis 15,
**dadurch gekennzeichnet,**
**daß** die Leitungsabschnitte (3) geteilt sind und zwei Mundungsöffnungen (4; 11) aufweisen, von denen eine Dünger (D) in den Bereich (15) unterhalb der Saatgutlinie (7) und eine Dünger (D) in die Aufnahmelinie (17) seitlich (16) der Saatgutlinie (7) einbringt.

19. Verfahren nach einem der Ansprüche 10 bis 18,
**dadurch gekennzeichnet,**
**daß** den Zinken oder Scharen (5) am Fahrzeug die gezogenen Fugen (6) zumindest bereichsweise verschließende Walzen (10) nachgeordnet sind.

20. Verfahren nach einem der Ansprüche 10 bis 19,
**dadurch gekennzeichnet,**
**daß** die gezogenen Fugen (6) als Führungshilfen für Düngeschare einer Maisdrille beim späteren Einbringen des Saatguts (14) dienen.
